# FASCICULE DE BREVET EUROPEEN

(11) **EP 1 517 855 B1**
(45) Date de publication et mention de la délivrance du brevet: **19.03.2008**
(21) Numéro de dépôt: 03762702.3
(22) Date de dépôt: 13.06.2003
(51) Int. Cl.: C01B 21/06

(54) **PROCEDE DE SYNTHESE DE NITRURE DE CALCIUM**
VERFAHREN ZUR CALCIUMNITRIDSYSNTHESE
METHOD FOR CALCIUM NITRIDE SYNTHESIS

(30) Priorité: 02.07.2002 FR 0208269
(43) Date de publication de la demande: 30.03.2005
(73) Titulaire: LACOSTE, Francois, F-92200 Neuilly-sur-Seine (FR)
(72) Inventeur: LACOSTE, Francois, F-92200 Neuilly-sur-Seine (FR)
(74) Mandataire: Jouvray, Marie-Andrée
(86) Numéro de dépôt international: PCT/FR2003/001782
(87) Numéro de publication internationale: WO 2004/005185

(56) Documents cités:
- WO-A-94/18120
- DE-A- 19 623 351
- DE-C- 494 212
- US-A- 2 467 647
- US-A- 3 692 474
- US-B1- 6 398 125
- DATABASE CA [en ligne] CHEMICAL ABSTRACTS SERVICE, COLUMBUS, OHIO, US; CHERN, MING Y. ET AL: "Synthesis, structure, and properties of calcium zinc nitride (Ca2ZnN2)" retrieved from STN Database accession no. 114:34737 CA XP002240600 & JOURNAL OF SOLID STATE CHEMISTRY (1990), 88(2), 528-33,

## Description

L'invention concerne un procédé de synthèse de nitrure de calcium selon lequel on fait réagir dans un réacteur, de l'azote avec une source de calcium.

La synthèse de nitrure de calcium en chauffant du calcium pur en présence d'azote est connue depuis les travaux d'Henri de Moissan, (Comptes Rendus à l'Académie des Sciences », 1898, tome 127, pages 497 à 501). Il a déterminé que la composition chimique du composé obtenu est Ca₃N₂ et que sa densité est de 2,63. V.Pitkin et C.B Alcock, (Bulletin of alloy phase diagrams, 1990, Vol II N°5, pages 497 à 503) ont démontré que le point de fusion du nitrure de calcium est voisin de 1450°C et qu'il ne se décompose que vers 1600°C.

En étudiant la cinétique de la réaction de nitruration du calcium massif, J.Aubry et R.Streiff (Comptes Rendus à l'Académie des Sciences, 1966, tome 263, pages 931 à 934), indiquent que la réaction entre du calcium de haute pureté obtenu par bisublimation et de l'azote sec débute à 200°C, mais que la prise de poids reste faible jusqu'à 500°C environ. Le calcium se recouvre en effet dès le début de l'expérience d'une couche de nitrure bleu foncé, compacte, très adhérente et à l'éclat métallique, ralentissant considérablement la vitesse de réaction. La pellicule très mince ainsi formée qui correspond à une prise de poids inférieure à 10mg/cm³ est très stable. Des expériences poursuivies pendant 50 heures à 600°C n'ont pas montré de reprise de la réaction.

Au-delà de 650°C, la réaction reprend, l'azote diffusant à l'état moléculaire jusqu'à l'interface calcium-nitrure, siège de la réaction. Ce changement dans la cinétique de la réaction correspond à la transformation allotropique du nitrure de calcium qui passe d'une structure quadratique à une structure cubique. Cette étude de la cinétique de la réaction de nitruration n'a cependant pas permis d'aboutir à un procédé de fabrication du nitrure de calcium industriel.

D'autres ont remplacé le calcium pur, industriellement non rentable, par du calcium obtenu industriellement sous forme de tournures et ont constaté que la réaction de nitruration ne commençait pas en dessous de 600°C et qu'il était nécessaire d'élever la température au-dessus de 650°C et même de préférence jusqu'à 700°C pour avoir une cinétique de réaction significative. Des difficultés apparaissent dès que l'on cherche à accélérer la réaction en augmentant le flux d'azote en contact avec le calcium. En effet, la réaction de nitruration est fortement exothermique, dégageant ainsi environ 425 kilojoules par moles de nitrure de calcium (Ca₃N₂), ce qui correspond à une température adiabatique théorique de plus de 4000°C.

Dès que l'apport en azote augmente, la réaction s'emballe, provoquant une augmentation de température qui dépasse la température de fusion du calcium, qui est de 839°C environ. Le calcium fondu se recouvre alors d'une couche de nitrure qui l'isole de l'azote et la réaction s'arrête presque complètement. Si la température redescend jusqu'à la solidification du calcium, la réaction reprend mais sous une forme considérablement ralentie car l'échantillon initial, constitué de tournures de grande surface spécifique, s'est transformé en une masse de calcium et de nitrure de calcium agglomérés, de faible surface spécifique et de grande épaisseur, ralentissant considérablement la réaction.

De manière à éviter cette difficulté, il est courant de conduire la réaction de nitruration en prenant soin, qu'en aucun point des tournures, la température ne dépasse 839°C. En opérant par injection de bouffées successives d'azote, entre lesquelles on laisse le calcium se refroidir jusque vers 650°C, on peut obtenir une nitruration complète du calcium. Ce procédé n'est cependant pas adaptable à une production à grande échelle, car il faut compter une dizaine d'heures pour nitrurer chaque lot de calcium.

Le brevet US6398125 décrit un procédé de synthèse de particules métalliques ou céramiques, par exemple des nitrures de métaux, dans lequel un métal ou un alliage en fusion est pulvérisé sous l'impulsion d'un fluide atomisant, par exemple l'azote. Les métaux employés sont des métaux ayant un point de fusion bas, par exemple le zinc.

### Objet de l'invention

L'invention a pour but un procédé de synthèse du nitrure de calcium, capable de produire le nitrure de calcium rapidement, en grande quantité et avec des matières premières économiques.

Selon l'invention, ce but est atteint par le fait que la source de calcium est un alliage de zinc-calcium en fusion et que l'azote est préalablement porté à une température supérieure ou égale à la température de fusion de l'alliage zinc-calcium.

Selon une caractéristique de l'invention, le zinc contenu dans l'alliage zinc-calcium est vaporisé par la chaleur libérée au cours de la réaction de nitruration du calcium, se condense sur des parois refroidies du réacteur et est recueilli dans le fond du réacteur.

Selon un développement de l'invention, l'alliage zinc-calcium est pulvérisé au sommet du réacteur sous forme de gouttelettes et la hauteur du réacteur est adaptée à la cinétique de la réaction, de manière à ce qu'une fraction significative du calcium contenu dans les gouttelettes soit nitrurée pendant la chute de celles-ci.

Selon un autre développement de l'invention, l'alliage zinc-calcium est pulvérisé sous forme de fines gouttelettes, sous l'impulsion d'un jet d'azote pressurisé porté à une température proche de celle de l'alliage zinc-calcium pulvérisé, le débit du jet d'azote étant, de préférence, supérieur ou égal à la quantité nécessaire pour nitrurer complètement le calcium contenu dans l'alliage zinc-calcium pulvérisé.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est un diagramme de phase de l'alliage zinc-calcium en fonction de la teneur atomique en zinc.
La figure 2 représente sous forme schématique un premier mode de réalisation d'un dispositif permettant la mise en oeuvre d'un procédé de synthèse selon l'invention.
La figure 3 représente sous forme schématique un second mode de réalisation d'un dispositif permettant la mise en oeuvre d'un procédé de synthèse selon l'invention.
La figure 4 représente sous forme schématique un troisième mode de réalisation d'un dispositif permettant la mise en oeuvre d'un procédé de synthèse selon l'invention.

### Description de modes particuliers de réalisation.

Selon l'invention, la synthèse du nitrure de calcium est réalisée en faisant réagir, dans un réacteur, de l'azote avec un alliage de zinc-calcium en fusion. L'azote est préalablement porté à une température supérieure ou égale à la température de fusion de l'alliage zinc-calcium.

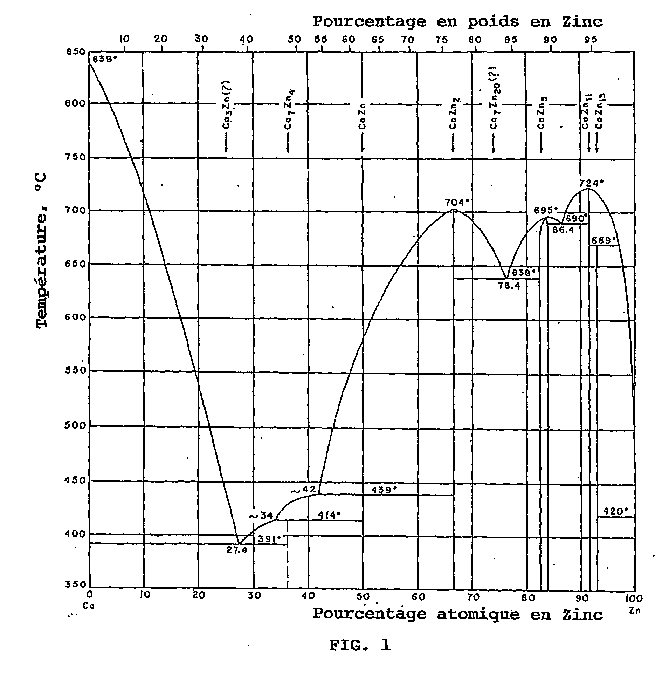

L'utilisation de l'alliage zinc-calcium comme source de calcium dans le procédé de nitruration est particulièrement intéressante parce que, comme l'enseigne R.Juza et al. (Z. Anorg. Chem., 239 p273, 1938), le nitrure de zinc (Zn₃N₂) ne peut se former par réaction directe de zinc métallique chaud sur de l'azote. D'autre part, comme indiqué sur le diagramme de la figure 1, les alliages zinc-calcium riches en calcium ont une température de fusion bien inférieure à celle du calcium pur. L'alliage zinc-calcium a de préférence une teneur atomique en calcium supérieure ou égale à 50 %, et plus particulièrement comprise entre 50 % et 80 %.

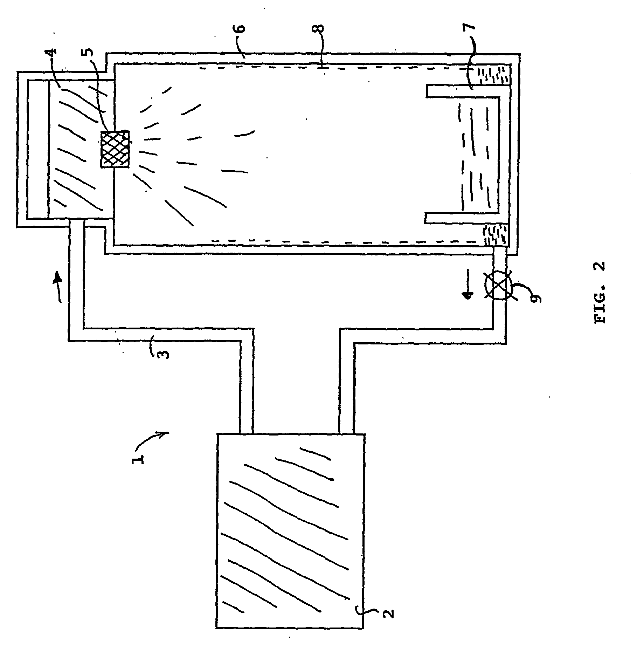

Dans un mode de réalisation particulier, comme représenté sur la figure 2, un dispositif 1 permettant de réaliser la synthèse du nitrure de calcium, comporte un réservoir 2 contenant l'alliage zinc calcium en fusion. Celui-ci est transféré à travers un tube d'alimentation 3 vers un four 4 dans lequel il est porté et/ou maintenu à une température prédéterminée, supérieure ou égale à sa température de fusion. Le four 4 peut comporter des moyens destinés à appliquer une pression réglable à l'alliage fondu. Ces moyens sont de préférence des moyens d'injection d'un gaz inerte tel que l'argon. L'alliage zinc-calcium est alors pulvérisé sous forme de gouttelettes grâce à un pulvérisateur 5 disposé à l'interface du four 4 et du sommet d'un réacteur 6. Le pulvérisateur 5 peut être de tout type. On utilisera par exemple un pulvérisateur tel que le pulvérisateur décrit dans le brevet EP-B1-0268627, qui concerne un procédé et un dispositif de granulation d'un matériau fondu, notamment de calcium et de magnésium.

Le dispositif 1 comporte des moyens d'alimentation en azote du réacteur 6 (non représentés sur la figure 2), l'alimentation en azote se faisant de préférence en continu, de façon à maintenir une pression prédéterminée dans le réacteur.

Le calcium contenu dans les gouttelettes réagit alors avec l'azote, dans le réacteur 6 pour former du nitrure de calcium. La hauteur du réacteur 6 est suffisamment grande, pour que pendant la chute des gouttelettes, une fraction significative de calcium contenu dans les gouttelettes soit nitrurée. Un collecteur 7 (figure 2) disposé dans la partie inférieure du réacteur recueille les gouttelettes à la fin de leur chute et est maintenu à une température d'au moins 650°C, de manière à ce que la réaction de nitruration puisse se poursuivre au niveau du collecteur.

Le réacteur 6 est également équipé de moyens permettant de chauffer et/ou de refroidir les parois verticales du réacteur 6. Au démarrage de la réaction, le chauffage porte la température de l'azote à une température voisine de la température initiale des gouttelettes pulvérisées dans le réacteur 6. Après le démarrage de la réaction, le chauffage est coupé et est remplacé par un refroidissement qui abaisse la température des parois du réacteur, jusqu'à une température proche de 500°C, de manière à évacuer la chaleur dégagée lors de la réaction de nitruration.

Au cours de la réaction de nitruration, qui est très exothermique, le zinc contenu dans les gouttelettes pulvérisées est vaporisé par la chaleur libérée au cours de la réaction de nitruration du calcium et se condense sur les parois refroidies du réacteur 6, sous forme des gouttes 8 de zinc liquide, représentées en pointillés sur la figure 2. Le zinc liquide est recueilli dans le fond du réacteur 6 et il est extrait par une vanne d'évacuation 9. Il peut être réinjecté dans le réservoir 2 contenant l'alliage zinc-calcium en fusion, de manière à servir pour la préparation d'un nouvel alliage.

Le nitrure de calcium produit au cours de la réaction peut se présenter sous la forme d'un agglomérat, qu'il peut être nécessaire de broyer après l'avoir extrait du collecteur 7. Si le nitrure de calcium est contaminé par un résidu de zinc, le zinc peut être facilement éliminé par distillation sous vide, par exemple, en profitant de la forte différence entre la température d'ébullition du zinc qui est de 907°C et la température de fusion du nitrure de calcium qui est de 1450°C. Le nitrure de calcium peut également être contaminé par un nitrure mixte Ca₂ZnN₂ qui peut être produit vers 650°C, par réaction de Ca₃N₂ avec du zinc en présence d'azote. Cette contamination peut, cependant, être facilement éliminée par chauffage au-delà de 700°C, le nitrure mixte Ca₂ZnN₂ étant, en effet, connu pour se décomposer à partir de 700°C (J.M. McHale et al., Chem. Eur. J.2, pages 1514 à 1517, 1996).

L'alliage de zinc-calcium peut être obtenu par fusion d'un mélange de poudres ou de tournures de zinc et de calcium. Pour une production à fort volume, il est, de préférence, obtenu par électrolyse d'un chlorure ou d'un oxyde de calcium, dans un bain d'électrolyse avec une cathode constituée de zinc fondu.

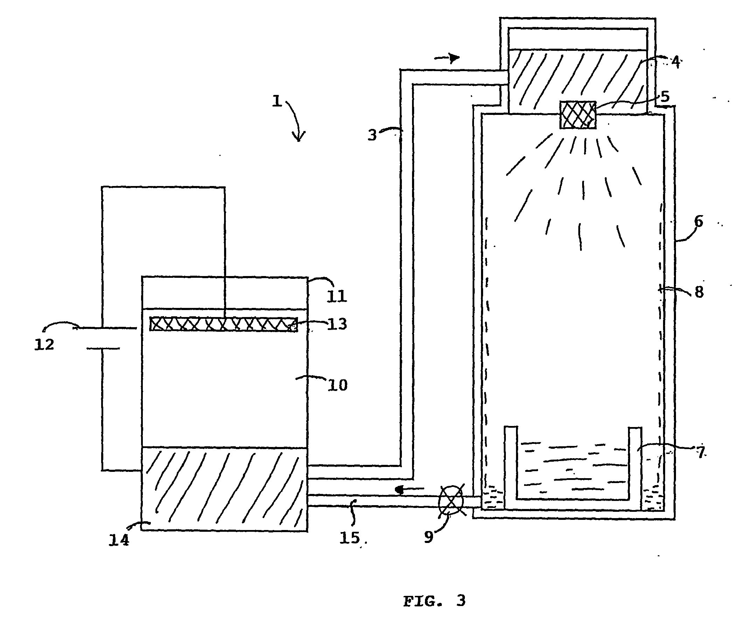

La production de l'alliage de zinc-calcium peut-être intégrée dans le procédé de fabrication du nitrure de calcium, comme représenté sur la figure 3. L'alliage zinc-calcium est alors obtenu par l'électrolyse du chlorure de calcium ou CaCl₂ dans une cellule d'électrolyse 11 reliée à un générateur de courant 12. La cellule d'électrolyse 11 est constituée d'une anode 13, de préférence en graphite et d'une cathode 14 formée par un bain de zinc en fusion. Lors du passage du courant, le bain de zinc en fusion s'enrichit progressivement en calcium tandis que l'anode 13 recueille le chlore qui se dégage au cours de la réaction d'électrolyse.

L'alliage zinc-calcium ainsi obtenu est alors transféré dans le four 4 par l'intermédiaire du tube du conduit d'alimentation 3, pour être introduit et traité dans le réacteur 6 selon la figure 2. Le zinc recueilli en bas du réacteur 6 peut alors être réinjecté dans le bain de zinc fondu constituant la cathode 14 par l'intermédiaire de la vanne d'évacuation 9 et d'un conduit de sortie 15, de manière à être réutilisé pour la préparation d'un nouvel alliage.

Le zinc recyclé vers la cellule d'électrolyse est susceptible d'être contaminé par du nitrure de calcium ou de l'oxyde de calcium (CaO). En effet, une partie de la poudre de nitrure de calcium produite dans le réacteur pourrait être piégée par le zinc condensé le long des parois. De même la présence d'un peu d'oxygène dans le réacteur, notamment par suite d'une légère contamination de l'azote industriel utilisé, peut produire de l'oxyde de calcium, qui est susceptible à son tour d'être piégé par le zinc liquide. Les contaminations éventuelles par le nitrure de calcium ou l'oxyde de calcium, seront alors éliminées lors de l'électrolyse. En effet, les deux composés contaminateurs sont plus légers que le zinc et viendront au contact du chlorure de calcium et se dissoudront dans celui-ci. De plus, ils ont des tensions de décomposition respectives (0,40V pour Ca₃N₂ et 2,75V pour CaO) qui sont inférieures à celle de CaCl₂ (3,30V). Ils se décomposeront donc par électrolyse en produisant du calcium à la cathode et de l'azote ou de l'oxygène à l'anode.

L'un des avantages majeurs d'utiliser un alliage de zinc-calcium, est qu'il a une température de fusion bien inférieure à celle du calcium pur, ce qui favorise la pulvérisation des gouttelettes, et qui permet ainsi d'obtenir un rendement de réaction plus élevé en augmentant la surface de contact entre le calcium et l'azote. La vaporisation du zinc, pendant la nitruration du calcium, et sa condensation ultérieure sur les parois du réacteur, facilitent également le transfert de chaleur vers l'extérieur du réacteur et permet donc d'augmenter le flux de production, sans surchauffe exagérée du réacteur.

Cela permet également d'intégrer la fabrication de l'alliage par électrolyse au procédé de synthèse du nitrure de calcium, et donc de réduire le prix de revient en supprimant plusieurs étapes coûteuses du procédé habituel de fabrication du calcium.

En particulier, l'électrolyse de chlorure de calcium peut être améliorée par l'adjonction de différents fondants et il est également possible de lui substituer une électrolyse d'oxyde de calcium.

L'importance de la teneur atomique en calcium de l'alliage zinc-calcium pour le bon fonctionnement de la réaction peut nécessiter l'introduction d'un réservoir tampon entre le lieu de production de l'alliage zinc-calcium et le réacteur. Ce réservoir tampon peut être alimenté en alternance par plusieurs sources de calcium et de zinc. Il peut être également équipé d'un système de mesure du taux de calcium, et être capable d'ajuster celui-ci par ajout de calcium ou de zinc, selon le cas, pour obtenir l'alliage zinc-calcium souhaité.

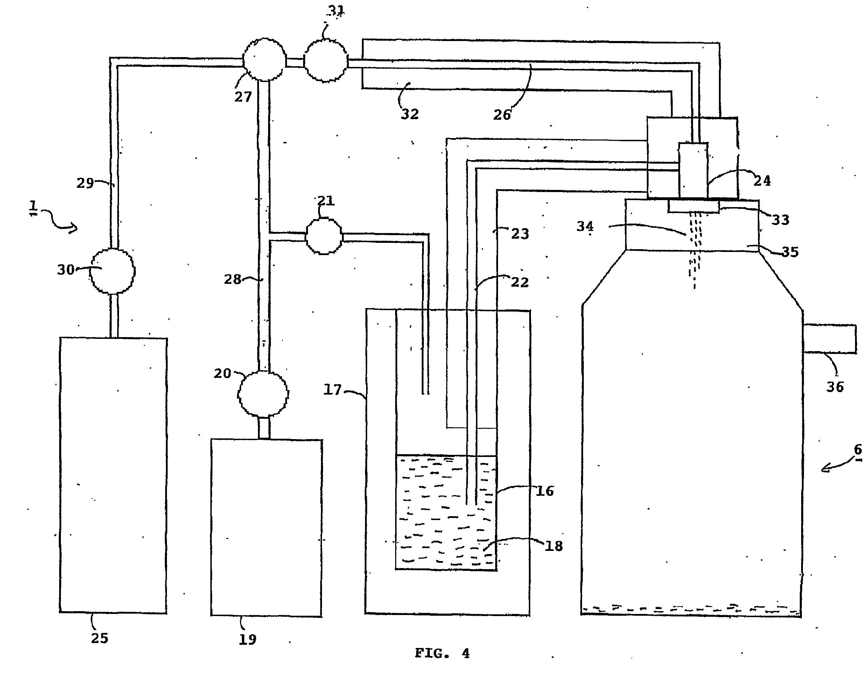

Dans un autre mode de réalisation, l'alliage zinc-calcium peut être pulvérisé sous forme de fines gouttelettes, sous l'impulsion d'un jet d'azote pressurisé porté à une température proche de celle de l'alliage zinc-calcium en fusion et pulvérisé. Ainsi, comme représenté à la figure 4, un dispositif 1 permettant de réaliser la synthèse du nitrure de calcium comporte un premier réservoir 16 muni de moyens de chauffage 17 destinés à conserver l'alliage zinc-calcium 18 en fusion dans le premier réservoir 16. L'alliage zinc-calcium 18 contenu dans le réservoir 16 est, de préférence, choisi de manière à avoir une température de fusion la plus basse possible. A titre d'exemple, l'alliage de zinc-calcium est un alliage comportant en proportion massique un tiers de zinc pour deux tiers de calcium, la température de fusion d'un tel alliage étant d'environ 420°C. De plus, l'alliage est pressurisé par de l'argon provenant d'un second réservoir 19, au moyen de premier et second détendeurs 20 et 21.

Un premier tube de siphonage 22 protégé par une gaine chauffante 23 permet de transférer l'alliage zinc-calcium en fusion du réservoir 16 vers un four 24. Le four 24 est destiné à recevoir de l'azote provenant d'un troisième réservoir 25 mais également de l'argon provenant du second réservoir 19. En effet, lors de la phase de démarrage du procédé de synthèse, il est nécessaire d'éviter un contact statique entre l'alliage zinc-calcium et l'azote. Ainsi, lors de la phase de démarrage de pulvérisation de l'alliage zinc-calcium, il est préférable de pulvériser celui-ci sous l'impulsion d'un jet d'argon avant de substituer le jet d'argon par un jet d'azote. Ceci permet d'éviter, au démarrage du procédé, une nitruration locale du calcium, qui pourrait entraîner une obturation du pulvérisateur.

Le transfert de l'azote et de l'argon vers le four 24 est réalisé grâce à un tube d'entrée 26 relié aux second et troisième réservoirs 19 et 25 par l'intermédiaire d'une vanne à trois voies 27. Ainsi, la vanne à trois voies 27 est respectivement reliée aux second et troisième réservoirs 19 et 25 par des second et troisième tubes 28 et 29. Le troisième tube 29 est muni d'un troisième détendeur 30 et le tube d'entrée 26 du four 24 comporte un débitmètre 31 disposé à proximité de la vanne à trois voies 27 et une gaine chauffante 32 disposée entre le débitmètre 31 et le four 24.

Ainsi, sous l'impulsion d'un jet d'azote ou d'argon pressurisé et préchauffé à une température supérieure ou égale à la température de fusion de l'alliage zinc-calcium, l'alliage zinc-calcium est injecté dans un pulvérisateur 33 de manière à former de fines gouttelettes 34 dans un réacteur 6 contenant de l'azote. La réaction de nitruration à l'intérieur du réacteur peut être observée à travers un hublot 35 transparent, disposé à proximité du pulvérisateur 33. Les produits de la réaction sont collectés dans le fond du réacteur 6 et éventuellement sur les parois latérales du réacteur 6. La pression de l'azote, à l'intérieur de réacteur est, de préférence, contrôlée par une soupape 36 disposée sur une des parois latérales du réacteur 6 et le dispositif 1 peut comporter un système de collecte et de recirculation de l'azote (non représenté).

L'alliage zinc-calcium et l'azote sont respectivement chauffés dans les premier et troisième tubes 22 et 29, de sorte qu'ils entrent chacun dans le four 24 à une température élevée, avant d'être pulvérisés par le pulvérisateur 33. Les températures de l'alliage zinc-calcium et de l'azote sont, de préférence, supérieures à 700°C, à l'entrée du pulvérisateur 33, avant que l'alliage zinc-calcium ne soit pulvérisé dans le réacteur sous l'action du jet d'argon. Les débits respectifs de l'alliage zinc-calcium et de l'azote, lors de leur entrée dans le four 24, sont ajustés de manière à ce que la quantité d'azote admise dans le four soit supérieure ou égale à celle nécessaire pour assurer la nitruration complète du calcium contenu dans l'alliage zinc-calcium.

Une fois l'alliage zinc-calcium pulvérisé sous forme de fines gouttelettes, les gouttelettes réagissent immédiatement avec l'azote chaud qui les propulse. La réaction de nitruration étant fortement exothermique, elle conduit à une élévation rapide de la température des parois du réacteur 6 et elle peut être visualisée par l'apparition d'une flamme ayant une longueur de l'ordre de 10 cm et un diamètre de quelques millimètres. Ainsi, le zinc contenu dans l'alliage zinc-calcium se vaporise au cours de la réaction puis se condense sur les parties supérieures des parois du réacteur. Une poudre fine, pulvérulente, de couleur brun foncé et contenant du nitrure de calcium se dépose dans le fond du réacteur 6.

Différentes analyses peuvent être réalisées pour déterminer la composition de la poudre fine et notamment les éléments de contamination du nitrure de calcium. Ainsi, il est possible de réaliser :
- une analyse chimique permettant de déterminer la proportion de zinc par rapport au calcium total contenu dans la poudre.
- une mesure de perte de poids après un chauffage sous vide réalisé à une température de l'ordre de 800°C, de manière à connaître la proportion de matière sublimée à cette température, la matière sublimée attendue étant du zinc,
- une mesure de perte de poids après un chauffage sous vide réalisé à une température de l'ordre de 1100°C, de manière à connaître la proportion de matière sublimée à cette température, la matière sublimée attendue étant du zinc et une fraction de calcium non nitruré ou non oxydé,
- une mesure d'accroissement de poids après calcination d'un échantillon préalablement chauffé sous vide à 1100°C, de manière à connaître la proportion de matière ayant réagit avec l'oxygène de l'air, la matière réagissant avec l'oxygène attendue étant le nitrure de calcium,
- un spectre de diffraction X d'un échantillon convenablement protégé de l'air, de manière à déterminer les éventuelles contaminations du nitrure de calcium.

A titre d'exemple, un procédé de synthèse de nitrure de calcium a été réalisé dans un dispositif tel que celui représenté à la figure 4. L'alliage zinc-calcium contenu dans le premier réservoir 19 comporte, en proportion massique, 1/3 de zinc et 2/3 de calcium. Le premier réservoir 19 est chauffé à une température de l'ordre de 450°C de manière à maintenir l'alliage zinc-calcium au-dessus de sa température de fusion qui est de l'ordre de 420°C. Pour l'argon, les premier et second détendeurs 20 et 21 sont réglés respectivement à des pressions absolues de 4bars et de 1,5bars tandis que pour l'azote, le troisième détendeur 30 est réglé à une pression absolue de 4 bars. Le pulvérisateur est, de préférence, un pulvérisateur 33 tel que ceux commercialisés par la société Enami Spraying Systems.

Les débits respectifs d'azote et de l'alliage zinc-calcium sont respectivement de 5l/mn à une pression de 4 bars (soit environ 26g/mn d'azote) et de 75g/mn (soit 50g/mn de calcium contenu dans l'alliage). Le rapport massique entre l'azote et le calcium respectivement injectés dans le réacteur est donc de l'ordre de 0,5 tandis que le rapport massique nécessaire à la nitruration complète du calcium est de 0,23. Le procédé de synthèse fonctionne donc avec un excédent d'azote de plus de 100% par rapport au minimum requis pour la réaction. Cet excédent peut être significativement réduit en utilisant un réacteur capable de fonctionner en continu, avec une température élevée à l'intérieur du réacteur.

## Revendications

1. Procédé de synthèse de nitrure de calcium selon lequel on fait réagir dans un réacteur (6), de l'azote avec une source de calcium, procédé **caractérisé en ce que** la source de calcium est un alliage de zinc-calcium en fusion, et que l'azote est préalablement porté à une température supérieure ou égale à la température de fusion de l'alliage zinc-calcium.

2. Procédé de synthèse selon la revendication 1, **caractérisé en ce que** le zinc contenu dans l'alliage zinc-calcium est vaporisé par la chaleur libérée au cours de la réaction de nitruration du calcium, se condense sur des parois refroidies du réacteur (6) et est recueilli dans le fond du réacteur.

3. Procédé de synthèse selon l'une des revendications 1 et 2 **caractérisé en ce que** le nitrure de calcium produit est extrait du réacteur, et le zinc résiduel contenu dans le nitrure de calcium est éliminé de celui-ci par une distillation sous vide.

4. Procédé de synthèse selon l'une des revendications 2 ou 3, **caractérisé en ce que** le zinc recueilli par condensation ou distillation au cours du procédé, est réutilisé pour la préparation d'un nouvel alliage.

5. Procédé de synthèse selon l'une quelconque des revendications 1 à 4, **caractérisé en ce que** l'alliage zinc-calcium est obtenu par électrolyse d'un sel fondu contenant un chlorure ou un oxyde de calcium, dans un bain d'électrolyse (11) avec une cathode (14) contenant du zinc en fusion.

6. Procédé de synthèse selon l'une quelconque des revendications 1 à 5, **caractérisé en ce que** la teneur atomique en calcium de l'alliage zinc-calcium est supérieure ou égale à 50 %.

7. Procédé de synthèse selon l'une quelconque des revendications 1 à 6, **caractérisé en ce que** l'alliage zinc-calcium est pulvérisé au sommet du réacteur (6) sous forme de gouttelettes et que la hauteur du réacteur est adaptée à la cinétique de la réaction, de manière à ce qu'une fraction significative du calcium contenu dans les gouttelettes soit nitrurée pendant la chute de celles-ci.

8. Procédé de synthèse selon l'une quelconque des revendications 1 à 7, **caractérisé en ce que** l'alliage zinc-calcium est pulvérisé sous forme de fines gouttelettes, sous l'impulsion d'un jet d'azote pressurisé porté à une température proche de celle de l'alliage zinc-calcium pulvérisé.

9. Procédé de synthèse selon la revendication 8, **caractérisé en ce que** le débit du jet d'azote est supérieur ou égal à la quantité nécessaire pour nitrurer complètement le calcium contenu dans l'alliage zinc-calcium pulvérisé.

10. Procédé de synthèse selon l'une des revendications 8 et 9, **caractérisé en ce que** lors d'une phase de démarrage, l'alliage zinc-calcium est préalablement pulvérisé sous l'impulsion d'un jet d'argon pressurisé porté à une température proche de celle de l'alliage zinc-calcium pulvérisé.

11. Procédé de synthèse selon l'une quelconque des revendications 7 à 10, **caractérisé en ce que** la température de l'alliage zinc-calcium et la température de l'azote sont supérieures à 700°C avant que l'alliage zinc-calcium ne soit pulvérisé.

12. Procédé de synthèse selon l'une quelconque des revendications 7 à 11, **caractérisé en ce que** le nitrure de calcium produit au cours de la réaction est recueilli dans un collecteur (7) situé en bas du réacteur (6).

13. Procédé de synthèse selon la revendication 12, **caractérisé en ce que** le collecteur (7) est maintenu à une température supérieure ou égale à 650°C.

## Claims

1. Calcium nitride synthesis process according to which nitrogen is made to react with a calcium source in a reactor (6), process **characterized in that** the calcium source is a molten zinc-calcium alloy and that the nitrogen is previously heated to a temperature greater than or equal to the melting temperature of the zinc-calcium alloy.

2. Synthesis process according to claim 1, **characterized in that** the zinc contained in the zinc-calcium alloy is vaporized by the heat released during the nitriding reaction of calcium, condenses on cooled walls of the reactor (6) and is collected at the bottom of the reactor.

3. Synthesis process according to one of the claims 1 and 2, **characterized in that** the calcium nitride produced is extracted from the reactor, and the residual zinc contained in the calcium nitride is eliminated from the latter by vacuum distillation.

4. Synthesis process according to one of the claims 2 and 3, **characterized in that** the zinc collected by condensation or distillation during the process is reused for the preparation of a new alloy.

5. Synthesis process according to any one of the claims 1 to 4, **characterized in that** the zinc-calcium alloy is obtained by electrolysis of a molten salt containing a calcium chloride or a calcium oxide, in an electrolytic bath (11) with a cathode (14) containing zinc in molten form.

6. Synthesis process according to any one of the claims 1 to 5, **characterized in that** the calcium atomic content of the zinc-calcium alloy is greater than or equal to 50 %.

7. Synthesis process according to any one of the claims 1 to 6, **characterized in that** the zinc-calcium alloy is sprayed into the top of the reactor (6) in the form of droplets and that the height of the reactor is adapted to the reaction kinetics, so that a significant fraction of the calcium contained in the droplets is nitrided during falling of the latter.

8. Synthesis process according to any one of the claims 1 to 7, **characterized in that** the zinc-calcium alloy is sprayed in the form of fine droplets, propelled by a jet of pressurized nitrogen heated to a temperature close to that of the sprayed zinc-calcium alloy.

9. Synthesis process according to claim 8, **characterized in that** the flowrate of the nitrogen jet is greater than or equal to the quantity required to completely nitride the calcium contained in the sprayed zinc-calcium alloy.

10. Synthesis process according to one of the claims 8 and 9, **characterized in that** in a starting phase, the zinc-calcium alloy is previously sprayed under the impulse of a pressurized argon jet heated to a temperature close to that of the sprayed zinc-calcium alloy.

11. Synthesis process according to any one of the claims 7 to 10, **characterized in that** the temperature of the zinc-calcium alloy and the temperature of the nitrogen are greater than 700°C before the zinc-calcium alloy is sprayed.

12. Synthesis process according to any one of the claims 7 to 11, **characterized in that** the calcium nitride produced in the course of the reaction is collected in a collector unit (7) located at the bottom of the reactor (6).

13. Synthesis process according to claim 12, **characterized in that** the collector unit (7) is kept at a temperature greater than or equal to 650°C.

## Patentansprüche

1. Verfahren zur Kalziumnitridsynthese, nach dem man in einem Reaktor (6) Stickstoff mit einer Kalziumquelle reagieren lässt, Verfahren, das **dadurch gekennzeichnet ist, dass** die Kalziumquelle eine schmelzflüssige Zink-Kalzium-Legierung ist und dass der Stickstoff vorab auf eine Temperatur gebracht wird, die gleich der Schmelztemperatur der Zink-Kalzium-Legierung oder höher als diese ist.

2. Syntheseverfahren nach Anspruch 1, **dadurch gekennzeichnet, dass** man das in der Zink-Kalzium-Legierung enthaltene Zink durch die während der Nitrierungsreaktion des Kalziums freigesetzte Wärme verdampfen lässt, dieses an gekühlten Wänden des Reaktors (6) kondensiert und am Boden des Reaktors aufgefangen wird.

3. Syntheseverfahren nach einem der Ansprüche 1 und 2, **dadurch gekennzeichnet, dass** das entstandene Kalziumnitrid aus dem Reaktor abgeführt wird und das restliche, im Kalziumnitrid enthaltene Zink diesem durch Destillierung unter Vakuum entzogen wird.

4. Syntheseverfahren nach einem der Ansprüche 2 oder 3, **dadurch gekennzeichnet, dass** das während des Verfahrens durch Kondensierung oder Destillierung erhaltene Zink zur Herstellung einer neuen Legierung verwendet wird.

5. Syntheseverfahren nach einem der Ansprüche 1 bis 4, **dadurch gekennzeichnet, dass** die Zink-Kalzium-Legierung durch Elektrolyse eines geschmolzenen Salzes, das ein Kalziumchlorid oder -oxid enthält, in einem Elektrolysebad (11) mit einer Kathode (14), die schmelzflüssiges Zink enthält.

6. Syntheseverfahren nach einem der Ansprüche 1 bis 5, **dadurch gekennzeichnet, dass** der Kalziumgehalt der Zink-Kalzium-Legierung größer oder gleich 50 Atom-% beträgt.

7. Syntheseverfahren nach einem der Ansprüche 1 bis 6, **dadurch gekennzeichnet, dass** die Zink-Kalzium-Legierung im oberen Teil des Reaktors (6) in Form Tröpfchen zerstäubt wird und dass die Höhe des Reaktors der Kinetik der Reaktion angepasst ist, sodass eine wesentliche Fraktion des in den Tröpfchen enthaltenen Kalziums während deren Herabfallen nitriert wird.

8. Syntheseverfahren nach einem der Ansprüche 1 bis 7, **dadurch gekennzeichnet, dass** die Zink-Kalzium-Legierung in Form feiner Tröpfchen zerstäubt wird, unter Wirkung eines unter Druck stehenden Stickstoffstrahls, der auf eine Temperatur gebracht wird, die nahe derjenigen der zerstäubten Zink-Kalzium-Legierung ist.

9. Syntheseverfahren nach Anspruch 8, **dadurch gekennzeichnet, dass** der Durchsatz des Stickstoffstrahls größer als die zur vollständigen Nitrierung des in der zerstäubten Zink-Kalzium-Legierung enthaltenen Kalziums erforderlichen Menge oder gleich dieser ist.

10. Syntheseverfahren nach eine m der Ansprüche 8 und 9, **dadurch gekennzeichnet, dass** die Zink-Kalzium-Legierung in einer Startphase zerstäubt wird, unter Wirkung eines unter Druck stehenden Argonstrahls, der auf eine Temperatur gebracht wird, die nahe derjenigen der zerstäubten Zink-Kalzium-Legierung ist.

11. Syntheseverfahren nach einem der Ansprüche 7 bis 10, **dadurch gekennzeichnet, dass** die Temperatur der Zink-Kalzium-Legierung und die Temperatur des Stickstoffs vor der Zerstäubung der Zink-Kalzium-Legierung über 700°C liegt.

12. Syntheseverfahren nach einem der Ansprüche 7 bis 11, **dadurch gekennzeichnet, dass** das bei der Reaktion entstandene Kalziumnitrid in einem Sammler (7) aufgefangen wird, der unten im Reaktor (6) angordnet ist.

13. Syntheseverfahren nach Anspruch 12, **dadurch gekennzeichnet, dass** der Sammler (7) auf einer Temperatur größer oder gleich 650°C gehalten wird.
